# FASCICULE DE BREVET EUROPEEN

(11) **EP 0 654 695 B1**
(45) Date de publication et mention de la délivrance du brevet: **19.08.1998**
(21) Numéro de dépôt: 94402594.9
(22) Date de dépôt: 16.11.1994
(51) Int. Cl.: G02F 1/313, H04B 10/00

(54) **Sélecteur optique et liaison optique comportant ce sélecteur**
Optischer Wähler und dessen Verwendung in einer optischen Verbindung
Optical selector and optical connection using same

(30) Priorité: 18.11.1993 FR 9313782
(43) Date de publication de la demande: 24.05.1995
(73) Titulaire: ALCATEL ALSTHOM COMPAGNIE GENERALE D'ELECTRICITE, 75008 Paris (FR)
(72) Inventeur: Duchet, Christian, F-91460 Marcoussis (FR); Le Roy, Guy, F-22300 Lannion (FR)
(74) Mandataire: Bourely, Paul

(56) Documents cités:
- US-A- 4 998 791
- PATENT ABSTRACTS OF JAPAN vol. 17, no. 347 (E-1391) 30 Juin 1993 & JP-A-05 048 584 (MITSUBISHI ELECTRIC CORP.) 26 Février 1993
- IEEE JOURNAL ON SELECTED AREAS IN COMMUNICATION, vol.SAC-2, no.6, Novembre 1984, NEW YORK US pages 801 - 806 P. FRANCO ET AL 'S-280 - A New Submarine Optical System'
- IEEE JOURNAL OF QUANTUM ELECTRONICS, vol.QE-22, no.6, Juin 1986, NEW YORK US pages 964 - 967 R.A. SPANKE 'Architectures for Large Nonblocking Optical Space Switches'
- PATENT ABSTRACTS OF JAPAN vol. 17, no. 351 (E-1392) 2 Juillet 1993 & JP-A-05 049 056 (NIPPON TELEGR. & TELEPH. CORP.) 26 Février 1993
- PATENT ABSTRACTS OF JAPAN vol. 7, no. 158 (E-186) (1303) 12 Juillet 1983 & JP-A-58 068 336 (NIPPON DENKI K.K.) 24 Avril 1983
- PATENT ABSTRACTS OF JAPAN vol. 7, no. 292 (E-219) (1437) 27 Décembre 1983 & JP-A-58 168 342 (KOKUSAI DENSHIN DENWA K.K.) 4 Octobre 1983

## Description

La présente invention concerne les communications optiques.

Elle concerne notamment un sélecteur optique permettant de sélectionner, pour un signal optique porteur d'une information à transmettre, un chemin optique parmi plusieurs chemins optiques prédéfinis et susceptibles chacun d'être emprunté par ce signal. Pour limiter le coût d'un tel sélecteur il est souhaitable de le constituer par une cascade de commutateurs réalisés sous une forme intégrée, c'est-à-dire sur un substrat commun. Lorsque plusieurs signaux sont fournis simultanément sur plusieurs bornes d'un sélecteur réalisé de cette manière une diaphonie peut apparaitre. Une telle diaphonie est réalisée par exemple par le fait que, si un signal à transmettre est reçu sur la borne d'extrémité propre au chemin optique sélectionné alors que d'autres signaux sont reçus par le sélecteur sur des bornes d'extrémités d'autres chemins optiques, le signal transmis est pollué par ces autres signaux.

Le document US-A-4 998 791 (KOAI) propose d'abaisser le taux de diaphonie d'un commutateur en intégrant à celui-ci des coupleurs commandés par les mêmes électrodes que le commutateur. La réalisation d'un sélecteur à l'aide d'un nombre important de tels commutateurs serait coûteuse.

L'article de R.A. Spanke dans IEEE Journal of Quantum Electronics QE-22, No. 6, June 1986, pp. 964-967, décrit un arrangement d'une pluralité de commutateurs optiques formant un sélecteur 1 x N.

La présente invention a notamment pour but de réaliser un sélecteur de manière à limiter à la fois son coût et sa diaphonie.

Dans ce but elle a pour objet un sélecteur optique comportant des commutateurs optiques formés sur un substrat transparent commun et constituant des commutateurs de sélection permettant de sélectionner un chemin optique parmi une pluralité de tels chemins prédéfinis sur ce substrat, chacun de ces commutateurs appartenant pour cela à plusieurs tels chemins et chacun de ces chemins comportant plusieurs de ces commutateurs en série, ce sélecteur étant caractérisé par le fait que d'autres commutateurs optiques formés sur ce substrat constituent des commutateurs d'isolation, chaque tel commutateur d'isolation appartenant à un seul tel chemin étant disposé en extrémité de ce chemin pour permettre d'isoler ce chemin d'organes optiques extérieurs à ce sélecteur.

La présente invention a également pour but de permettre de sécuriser simplement une liaison de communication optique comportant des terminaux et plusieurs lignes optiques joignant deux tels terminaux.

Dans ce but elle a pour objet une liaison optique comportant un sélecteur qui peut avantageusement être du genre indiqué ci-dessus.

A l'aide des figures schématiques ci-jointes, on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente une vue d'un sélecteur selon cette invention.

La figure 2 représente une vue d'un commutateur optique de ce sélecteur.

La figure 3 représente une vue d'une liaison optique comportant ce sélecteur.

La figure 4 représente une vue d'un terminal de cette liaison.

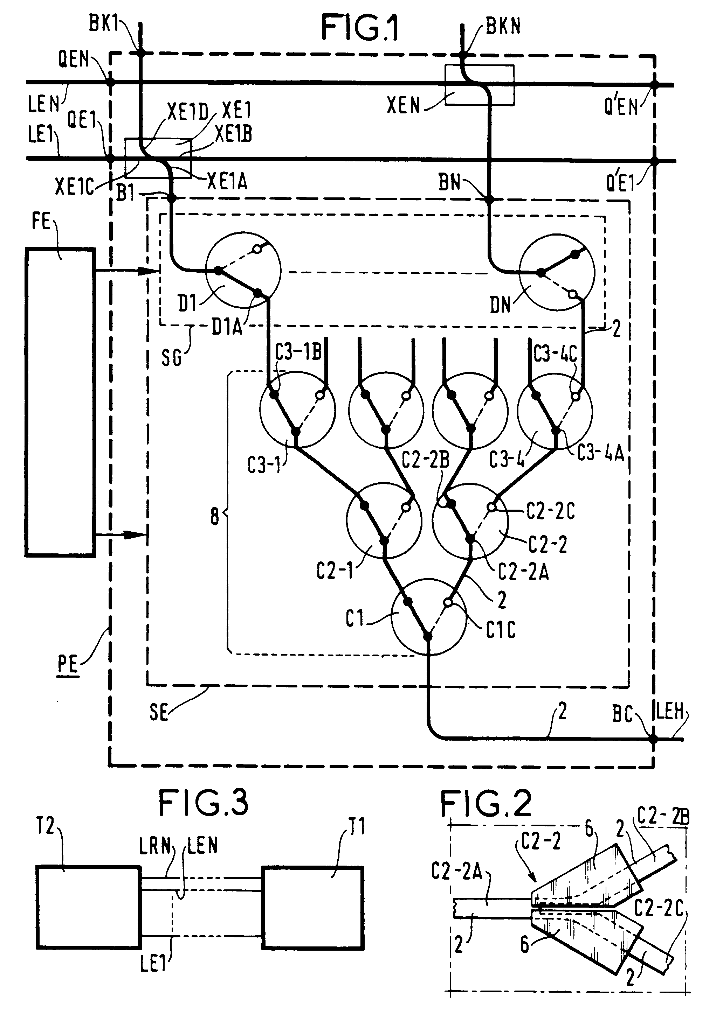

Conformément aux figures 1 et 2 un sélecteur optique selon cette invention comporte les composants suivants:
- Une pluralité de bornes particulières B1...BN aptes à être raccordées optiquement à une pluralité de guides optiques particuliers LE1...LEN extérieurs à ce sélecteur, respectivement.
- Une borne commune BC apte à être raccordée optiquement directement à un guide optique commun LEH extérieur à ce sélecteur.
- Un substrat transparent PE présentant des différences d'indices de réfraction formant des guides optiques 2. La propagation de la lumière dans ces guides est sensible à une action électrique de commande et ces guides sont disposés de manière à constituer la partie optique d'un ensemble de commutateurs optiques SE comportant en outre une partie électrique pour exercer cette action de commande.
- Et des électrodes (6, voir figure 2) formées sur ce substrat pour constituer cette partie électrique.

Cet ensemble de commutateurs comporte un ensemble de sélection 8, les commutateurs de cet ensemble de sélection constituant des commutateurs de sélection C1...C3-4. Chacun de ces commutateurs de sélection tel que C2-2 comporte une borne inférieure C2-2A et plusieurs bornes supérieures C2-2B, C2-2C et est apte à sélectionner sur commande l'une de ces bornes supérieures pour raccorder optiquement cette borne inférieure à la borne supérieure sélectionnée telle que C2-2B. Ces commutateurs de sélection sont disposés pour pouvoir former une pluralité de chemins optiques (BC, C1, C2-1, C3-1, C3-1B)...(BC, C1, C2-2, C3-4, C3-4C) correspondant respectivement à la pluralité des bornes particulières B1...BN et raccordant chacun la borne commune BC à la borne particulière correspondant à ce chemin. Chaque chemin tel que BC...C3-4C comporte une succession de commutateurs tels que C1, C2-2, C3-4 présentant des rangs 1...3 dans cette succession. Un premier commutateur de ce chemin C1 a sa borne inférieure raccordée à la borne commune BC. Un deuxième commutateur C2-2 de ce chemin a sa borne inférieure C2-2A raccordée à une borne supérieure C1-C de ce premier commutateur, et ainsi de suite jusqu'à un dernier commutateur C3-4 de ce chemin. Ce chemin comporte encore une borne terminale C3-4C constituée par une borne supérieure de ce dernier commutateur, un raccordement étant prévu entre cette borne terminale C3-4C et la borne particulière BN correspondant à ce chemin. Compte tenu de la transparence du substrat des couplages optiques parasites peuvent apparaitre entre divers chemins.

Ce sélecteur comporte encore un organe de commande FE disposé pour recevoir un signal de sélection désignant une borne particulière sélectionnée B1. Cet organe commande en réponse des commutateurs de sélection de manière à rendre passant le chemin optique BC, C1, C2-1, C3-1, C3-1B correspondant à la borne particulière sélectionnée. Il raccorde ainsi cette borne particulière sélectionnée à la borne commune BC.

Selon une caractéristique de la présente invention ledit ensemble de commutateurs optiques SE comporte aussi un étage d'isolation SG formé par une pluralité de commutateurs d'isolation D1...DN en correspondance respective avec la pluralité des bornes particulières B1..BN et avec la pluralité des chemins optiques. Chaque commutateur d'isolation tel que D1 comporte d'une part une borne inférieure telle que D1A raccordée à la borne terminale telle que C3-1B du chemin correspondant à ce commutateur, d'autre part une borne supérieure B1 raccordée à la borne particulière telle que B1 correspondant à ce commutateur (et constituée par exemple par cette borne particulière). Ce commutateur est sur commande passant pour raccorder mutuellement ses deux bornes ou bloquant pour les isoler de manière à réaliser ou à supprimer ledit raccordement entre cette borne terminale et cette borne particulière respectivement.

En réponse à un signal de sélection, l'organe de commande FE commande les commutateurs d'isolation pour rendre passant le commutateur d'isolation D1 correspondant à la borne particulière sélectionnée B1 et pour rendre bloquants les autres commutateurs d'isolation DN.

Un peu plus particulièrement les commutateurs de sélection tels que C2-2 ont chacun deux bornes supérieures C2-2B, C2-2C constituant l'une la borne droite C2-2C l'autre une borne gauche C2-2B de ce commutateur.

Ils forment une succession d'étages de sélection. Un premier étage comporte un commutateur C1 constituant le premier commutateur de tous les chemins optiques. Un deuxième étage C2-1, C2-2 comporte deux commutateurs constituant les deuxièmes commutateurs de ces chemins et ayant leurs bornes inférieures telles que C2-2A raccordées respectivement aux deux bornes supérieures telles que C1-C du commutateur du premier étage. Certains au moins des commutateurs tels que C3-4 de chaque étage de sélection ont leurs bornes inférieures telles que C3-4A raccordées respectivement aux bornes supérieures telles que C2-2C de commutateurs tels que C2-2 de l'étage de sélection précédent.

Plus particulièrement encore et comme représenté tous les chemins comportent un même nombre de commutateurs de sélection, ce nombre étant aussi celui desdits étages de sélection et valant par exemple 3, le nombre desdites bornes particulières étant N=2^{k} et valant par exemple 8. Chaque étage de sélection de rang i par exemple 3 comporte alors 2ⁱ⁻¹, par exemple quatre commutateurs de sélection C3-1...C3-4. Les bornes inférieures telles que C3-4A de ces commutateurs sont respectivement connectées aux bornes supérieures telles que C2-2C des commutateurs tels que C2-2 de l'étage précédent.

De préférence le substrat PE comporte aussi une pluralité de coupleurs optiques passifs XE1...XEN associés à ce sélecteur et correspondant respectivement à la pluralité des bornes particulières B1..BN. Chacun de ces coupleurs tel que XE1 a au moins trois et par exemple quatre branches telles que XE1A, XE1B, XE1C et XE1D. Ces branches sont formées dans ce substrat. La branche XE1A est raccordée à la borne particulière B1 correspondant à ce coupleur. Les branches XE1B, XE1C et XE1D sont raccordées respectivement à des bornes Q'E1, QE1 et BK1 du substrat, ces bornes correspondant aussi à ce coupleur. Il en est de même pour les autres coupleurs jusqu'au coupleur XEN auquel correspondent de même les bornes BN, Q'EN, QEN et BKN.

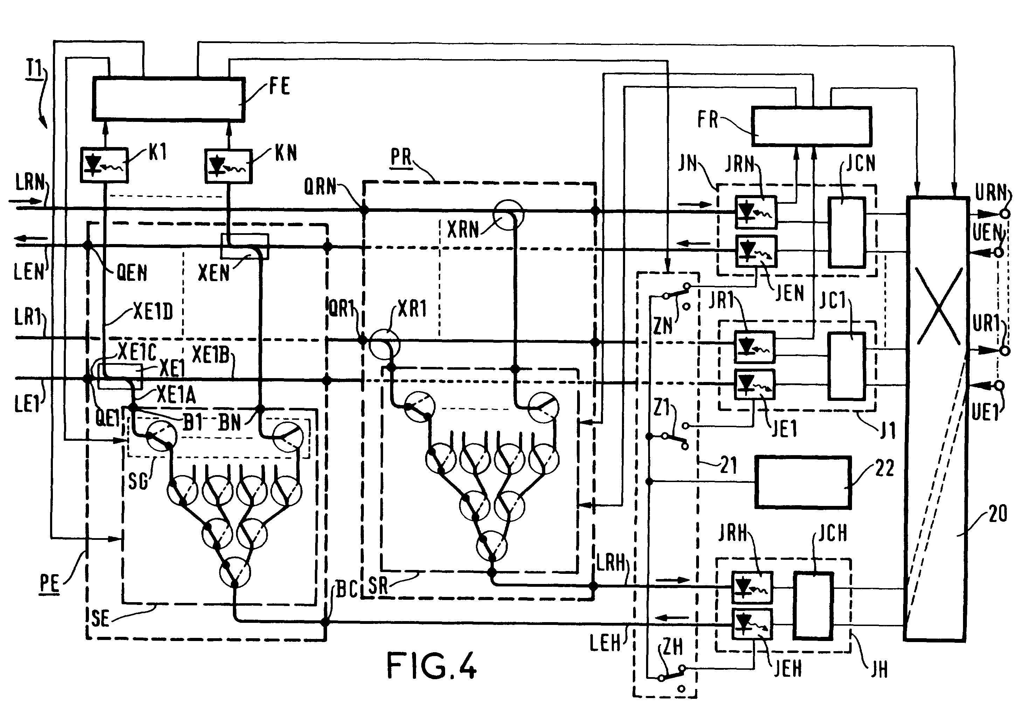

Conformément aux figures 3 et 4 la présente invention a aussi pour objet une liaison optique comportant deux terminaux T1 et T2. Chacun de ces terminaux est relié à N usagers qui peuvent être des abonnés à un réseau, des circuits ou tous autres émetteurs ou récepteurs d'informations. Il établit avec ces usagers des communications par transmission en parallèle d'un nombre N de signaux électriques et réalise une transformation entre ces N signaux électriques et N signaux optiques correspondant respectivement à ces signaux électriques. Cette liaison comporte aussi un nombre N de lignes de transmission à fibres optiques LE1...LEN correspondant respectivement à ces signaux optiques pour transmettre chacune le signal optique correspondant entre ces deux terminaux.

Chaque terminal tel que T1 comporte:
- N bornes électriques UE1...UEN ayant des numéros respectifs 1...N et raccordées respectivement aux N usagers,
- N bornes optiques QE1...QEN ayant des numéros respectifs 1...N et raccordées respectivement aux N lignes de transmission à fibres optiques LE1...LEN,
- et un ensemble de jonction pour raccorder respectivement ces N bornes électriques à ces N bornes optiques tout en réalisant ladite transformation entre les signaux électriques et les signaux optiques.

Cet ensemble de jonction comporte lui même les composants suivants:
- N joncteurs ordinaires J1...JN ayant des numéros respectifs correspondant respectivement aux N lignes de transmission LE1...LEN. Chacun de ces joncteurs réalise la transformation entre le signal électrique et le signal optique correspondant à cette ligne. Il est susceptible de devenir défaillant, ce qui est par exemple le cas du joncteur J1. Une borne électrique UE1 ou optique QE1 qui était connectée ou raccordée à ce joncteur défaillant sera désignée ci-après comme étant une borne électrique ou optique concernée par la défaillance de ce joncteur.
- Un joncteur de secours JH pour remplacer un joncteur ordinaire éventuellement défaillant tel que J1.
- Un détecteur de défaillance pour recevoir, en cas de défaillance d'un joncteur ordinaire tel que J1, un signal de sélection représentatif du numéro de ce détecteur défaillant. Ce détecteur de défaillance constitue l'organe de commande FE précédemment mentionné.
- Un réseau de connexion 20 commandé par le détecteur de défaillance FE de manière que, tant qu'aucun joncteur ordinaire n'est défaillant, ce réseau connecte respectivement les N bornes électriques UE1...UEN aux N joncteurs ordinaires J1...JN et que lorsqu'un joncteur ordinaire devient défaillant J1 ce réseau connecte la borne électrique concernée par cette défaillance UE1 au joncteur de secours JH. Ce réseau de connexion peut avantageusement aussi permettre de modifier la correspondance entre les bornes électriques du terminal et les joncteur ordinaires.
- Un sélecteur, de préférence tel que le sélecteur décrit précédemment et constitué par les composants SE et FE.

La borne commune BC de ce sélecteur est raccordée au joncteur de secours JH. Son organe de commande est constitué par le détecteur de défaillance FE. Ses bornes particulières B1..BN sont en nombre N et ont des numéros 1...N. Ce détecteur de défaillance donne, lorsqu'un joncteur ordinaire devient défaillant J1, un ordre de sélection désignant la borne particulière B1 qui a le même numéro que ce joncteur défaillant, de manière à raccorder cette borne particulière au joncteur de secours JH.

Enfin les N coupleurs optiques passifs XE1...XEN précédemment mentionnés constituent des coupleurs de secours pour raccorder chaque borne optique telle que QE1 du terminal T1 à la fois d'une part au joncteur ordinaire J1 par l'intermédiaire de la borne Q'E1, d'autre part à la borne particulière B1 du sélecteur SE qui ont le même numéro 1 que cette borne optique du terminal.

Les composants du terminal T1 qui viennent d'être décrits peuvent être appelés des composants généraux d'un tel terminal parce que, dans le cadre de cette description ci-dessus, ils peuvent être affectés aussi bien à l'émission qu'à la réception de signaux optiques par ce terminal. Cependant les signes de référence qui ont été utilisés pour illustrer cette description avec l'aide des figures correspondent seulement au cas de l'émission de tels signaux optiques. C'est pourquoi on considérera ci-après que ces composants décrits avec leurs signes de référence constituent un terminal d'émission prévu pour émettre des signaux optiques. Chaque joncteur ordinaire J1 de ce terminal d'émission comporte pour cela un émetteur JE1 constitué par un laser semi-conducteur. Cet émetteur est alimenté à partir d'une source d'alimentation 22 par un courant électrique de polarisation. Il reçoit d'autre part un dit signal électrique pour émettre un dit signal optique modulé par ce signal électrique. Le détecteur de défaillance et le sélecteur de ce terminal d'émission constituent respectivement un détecteur de défaillance d'émission FE et un sélecteur d'émission SE, FE. De préférence ce terminal d'émission T1 comporte en outre N interrupteurs de polarisation Z1...ZN ayant des numéros 1...N et inclus dans un bloc d'interrupteurs 21. Chacun de ces interrupteurs est connecté en série entre la source d'alimentation 22 et l'émetteur JE1 du joncteur ordinaire J1 ayant le même numéro que cet interrupteur. Ces interrupteurs sont commandés par le détecteur de défaillance d'émission FE. Lorsqu'un joncteur ordinaire tel que J1 devient défaillant ce détecteur coupe le courant électrique de polarisation de l'émetteur de ce joncteur. Cette disposition présente un avantage dans le cas où le laser du joncteur défaillant tel que J1 continue à émettre une onde optique incorrecte. Elle évite alors que cette onde incorrecte soit injectée par le coupleur de secours XE1 dans une ligne optique LE1 et vienne interférer avec l'onde correcte fournie par le joncteur de secours JH. De préférence et comme représenté le joncteur de secours JH comporte un émetteur semblable JEH alimenté par la même source 22 à travers un interrupteur ZH qui est aussi inclus dans le bloc 21 et qui est commandé par le détecteur de défaillance d'émission FE pour transmettre un courant de polarisation seulement lorsqu'un joncteur ordinaire est défaillant.

De préférence chaque coupleur de secours tel que XE1 du terminal d'émission T1 comporte deux branches d'entrée XE1B et XE1A raccordées respectivement à un joncteur ordinaire tel que J1 et à la borne particulière correspondante B1 du sélecteur d'émission SE et deux branches de sortie XE1C et XE1D raccordées respectivement à une borne optique QE1 du terminal T1 et, par l'intermédiaire de la borne BK1, à un transducteur optoélectrique K1 faisant partie d'une pluralité de N tels transducteurs K1...KN. Ce transducteur fournit un dit signal électrique de sélection au détecteur de défaillance FE lorsqu'une onde optique fournie à ce transducteur présente des caractéristiques anormales.

De préférence les composants du terminal T1 constituent en outre un terminal de réception comportant lui aussi lesdits composants généraux de sorte que le terminal T1 constitue un terminal mixte. Les joncteurs tels que J1, JN ou JH de ce terminal mixte correspondent respectivement auxdits joncteurs de ce terminal de réception et comportent chacun un récepteur tel que JR1, JRN ou JRH pour constituer le joncteur correspondant du terminal de réception. Chaque tel récepteur est constitué par une diode semiconductrice détectrice. Le détecteur de défaillance FR et le sélecteur (SR-FR) de ce terminal de réception constituent respectivement un détecteur de défaillance de réception et un sélecteur de réception. Ce détecteur de défaillance de réception est connecté électriquement aux sorties de récepteurs des joncteurs ordinaires J1...JN de ce terminal mixte pour en recevoir un éventuel signal de sélection.

Plus généralement, à chacun des organes tels que SE qui ont été décrits ci-dessus comme composant du terminal d'émission incorporé dans le terminal de liaison T1 et qui ont été désignés par un signe de référence comportant la lettre E, correspond un organe tel que SR assurant des fonctions analogues, mais pour la réception, ce dernier organe étant l'un des composants du terminal de réception incorporé aussi dans le terminal de liaison T1 et étant désigné par le même signe de référence que le composant correspondant du terminal d'émission, avec la seule différence que la lettre E est remplacée dans ce signe de référence par la lettre R. Le réseau de connexion 20 est commun aux deux terminaux d'émission et de réception.

Chaque joncteur du terminal mixte tel que J1, JN ou JH comporte un émetteur tel que JE1, JEN ou JEH appartenant au terminal d'émission et un récepteur tel que JR1, JRN ou JRH appartenant au terminal de réception. Il comporte aussi un circuit électrique tel que JC1, JCN ou JCH pour alimenter cet émetteur et ce récepteur et pour traiter les signaux électriques qui leur sont appliqués ou qu'ils fournissent.

De préférence le terminal T2 de la liaison est constitué comme indiqué ci-dessus pour le terminal T1.

## Revendications

1. Sélecteur optique comportant des commutateurs optiques formés sur un substrat transparent (PE) commun et constituant des commutateurs de sélection (C1...C3-4) permettant de sélectionner un chemin optique (BC, C1, C2-1, C3-1, D1, B1) parmi une pluralité de tels chemins prédéfinis sur ce substrat, chacun de ces commutateurs appartenant pour cela à plusieurs tels chemins et chacun de ces chemins comportant plusieurs de ces commutateurs en série, ce sélecteur étant caractérisé par le fait que d'autres commutateurs optiques formés sur ce substrat (PE) constituent des commutateurs d'isolation (D1...DN), chaque tel commutateur d'isolation appartenant à un seul tel chemin et étant disposé en extrémité de ce chemin pour permettre d'isoler ce chemin d'organes optiques extérieurs à ce sélecteur.

2. Sélecteur optique, ce sélecteur (SE, FE) comportant
- une pluralité de bornes particulières (B1..BN) aptes à être raccordées optiquement à une pluralité de guides optiques particuliers (LE1...LEN) extérieurs à ce sélecteur, respectivement,
- une borne commune (BC) apte à être raccordée optiquement directement à un guide optique commun (LEH) extérieur à ce sélecteur,
- un substrat transparent (PE) présentant des différences d'indices de réfraction formant des guides optiques (2), la propagation de la lumière dans ces guides étant sensible à une action électrique de commande et ces guides étant disposés de manière à constituer la partie optique d'un ensemble de commutateurs optiques (SE) comportant en outre une partie électrique pour exercer cette action de commande,
- et des électrodes (6, figure 2) formées sur ce substrat pour constituer cette partie électrique,
- cet ensemble de commutateurs comportant un ensemble de sélection (8), les commutateurs de cet ensemble de sélection constituant des commutateurs de sélection (C1...C3-4), chacun de ces commutateurs de sélection (C2-2) comportant une borne inférieure (C2-2A) et plusieurs bornes supérieures (C2-2B, C2-2C) et étant apte à sélectionner sur commande l'une de ces bornes supérieures pour raccorder optiquement cette borne inférieure à cette borne supérieure sélectionnée (C2-2B), ces commutateurs de sélection étant disposés pour pouvoir former une pluralité de chemins optiques (BC, C1, C2-1, C3-1, C3-1B)...(BC, C1, C2-2, C3-4, C3-4C) correspondant respectivement à la pluralité des bornes particulières (B1...BN) et raccordant chacun la borne commune (BC) à la borne particulière correspondant à ce chemin, chaque chemin (BC...C3-4C) comportant une succession de commutateurs (C1, C2-2, C3-4) présentant des rangs (1...3) dans cette succession, un premier commutateur de ce chemin (C1) ayant sa borne inférieure raccordée à la borne commune (BC), un deuxième commutateur (C2-2) de ce chemin ayant sa borne inférieure (C2-2A) raccordée à une borne supérieure (C1-C) de ce premier commutateur, et ainsi de suite jusqu'à un dernier commutateur (C3-4) de ce chemin, ce chemin comportant encore une borne terminale (C3-4C) constituée par une borne supérieure de ce dernier commutateur, un raccordement étant prévu entre la borne terminale (C3-4C) de ce chemin et la borne particulière (BN) correspondant à ce chemin, des couplages optiques parasites pouvant apparaitre au sein du substrat entre divers chemins,
- ce sélecteur comportant encore un organe de commande (FE) disposé pour recevoir un signal de sélection désignant une borne particulière sélectionnée (B1) et apte à commander en réponse des commutateurs de sélection de manière à rendre passant le chemin optique (BC, C1, C2-1, C3-1, C3-1B) correspondant à cette borne particulière sélectionnée et à raccorder ainsi cette borne particulière sélectionnée à la borne commune (BC),
ce sélecteur étant caractérisé par le fait que ledit ensemble de commutateurs optiques (SE) comporte aussi un étage d'isolation (SG) formé par une pluralité de commutateurs d'isolation (D1...DN) en correspondance respective avec la pluralité des bornes particulières (B1...BN) et avec la pluralité des chemins optiques, chaque commutateur d'isolation (D1) comportant d'une part une borne inférieure (D1A) raccordée à la borne terminale (C3-1B) du chemin correspondant à ce commutateur, d'autre part une borne supérieure (B1) au moins raccordée à la borne particulière correspondant à ce commutateur, ce commutateur étant sur commande passant pour raccorder mutuellement ses deux bornes ou bloquant pour les isoler de manière à réaliser ou à supprimer ledit raccordement entre cette borne terminale et cette borne particulière, respectivement,
- l'organe de commande (FE) étant aussi apte, en réponse à un signal de sélection, à commander les commutateurs d'isolation pour rendre passant le commutateur d'isolation (D1) correspondant à la borne particulière sélectionnée (B1) et pour rendre bloquants les autres commutateurs d'isolation (DN).

3. Sélecteur selon la revendication 2, caractérisé par le fait qu'il comporte aussi une pluralité de coupleurs optiques passifs (XE1...XEN) correspondant respectivement à la pluralité desdites bornes particulières (B1...BN), chacun de ces coupleurs (XE1) ayant au moins trois branches (XE1A, XE1B, XE1C) formées dans ledit substrat transparent (PE), une branche (XE1A) de ce coupleur étant raccordée à la borne particulière (B1) correspondant à ce coupleur.

4. Liaison optique comportant deux terminaux (T1, T2) chacun pour établir avec N usagers des communications par transmission en parallèle d'un nombre N de signaux électriques, et pour réaliser une transformation entre ces N signaux électriques et N signaux optiques correspondant respectivement à ces signaux électriques,
- et un nombre N de lignes de transmission à fibres optiques (LE1...LEN) correspondant respectivement à ces signaux optiques pour transmettre chacune le signal optique correspondant entre ces deux terminaux,
- chaque terminal comportant:
- N bornes électriques (UE1...UEN) ayant des numéros respectifs (1...N) et raccordées respectivement aux N usagers,
- N bornes optiques (QE1...QEN) ayant des numéros respectifs (1...N) et raccordées respectivement aux N lignes de transmission à fibres optiques (LE1...LEN),
- et un ensemble de jonction pour raccorder respectivement ces N bornes électriques à ces N bornes optiques tout en réalisant ladite transformation entre les signaux électriques et les signaux optiques, cet ensemble de jonction comportant lui même:
- N joncteurs ordinaires (J1...JN) ayant des numéros respectifs correspondant respectivement aux N lignes de transmission (LE1...LEN) pour réaliser chacun la transformation entre le signal électrique et le signal optique correspondant à cette ligne, chacun de ces joncteurs étant susceptible de devenir défaillant (J1), une borne électrique (UE1) ou optique (QE1) qui était connectée ou raccordée à ce joncteur défaillant constituant une borne électrique ou optique concernée par la défaillance de ce joncteur,
- un joncteur de secours (JH) pour remplacer un joncteur ordinaire éventuellement défaillant (J1),
- un détecteur de défaillance (FE) pour recevoir, en cas de défaillance d'un joncteur ordinaire (J1), un signal de sélection représentatif du numéro de ce détecteur défaillant,
- un réseau de connexion (20) commandé par le détecteur de défaillance (FE) de manière que, tant qu'aucun joncteur ordinaire n'est défaillant, ce réseau connecte respectivement les N bornes électriques (UE1...UEN) aux N joncteurs ordinaires (J1...JN) et que lorsqu'un joncteur ordinaire devient défaillant (J1) ce réseau connecte la borne électrique concernée par cette défaillance (UE1) au joncteur de secours (JH),
- un sélecteur (SE, FE) selon la revendication 2, la borne commune (BC) de ce sélecteur étant raccordée au joncteur de secours (JH), l'organe de commande de ce sélecteur étant constitué par le détecteur de défaillance (FE), les bornes particulières (B1...BN) de ce sélecteur étant en nombre N et ayant des numéros (1...N), ce détecteur de défaillance donnant, lorsqu'un joncteur ordinaire devient défaillant (J1), un ordre de sélection désignant la borne particulière (B1) qui a le même numéro que ce joncteur défaillant, de manière à raccorder cette borne particulière au joncteur de secours (JH),
- et N coupleurs optiques passifs (XE1...XEN) constituant des coupleurs de secours pour raccorder chaque borne optique (QE1) du terminal (T1) à la fois au joncteur ordinaire (J1) et à la borne particulière (B1) du sélecteur (SE) qui ont le même numéro (1) que cette borne optique du terminal.

5. Liaison selon la revendication 4, dans laquelle certains au moins des composants d'un terminal de cette liaison (T1) constituent un terminal d'émission conforme au terminal décrit dans cette revendication, chaque joncteur ordinaire (J1) de ce terminal d'émission comportant un émetteur (JE1) constitué par un laser semi-conducteur et alimenté à partir d'une source d'alimentation (22) par un courant électrique de polarisation et recevant d'autre part un dit signal électrique pour émettre un dit signal optique modulé par ce signal électrique, le détecteur de défaillance et le sélecteur de ce terminal d'émission constituant respectivement un détecteur de défaillance d'émission (FE), et un sélecteur d'émission (SE, FE),
cette liaison étant caractérisée par le fait que ce terminal d'émission (T1) comporte en outre N interrupteurs de polarisation (Z1...ZN) ayant des numéros (1...N) et connectés chacun en série entre ladite source d'alimentation (22) et l'émetteur (JE1) du joncteur ordinaire (J1) ayant le même numéro que cet interrupteur, ces interrupteurs étant commandés par le détecteur de défaillance d'émission (FE) lorsqu'un joncteur ordinaire (J1) devient défaillant pour couper le courant électrique de polarisation de l'émetteur de ce joncteur.

6. Liaison selon la revendication 5, caractérisée par le fait que chaque coupleur de secours (p.e. XE1) du terminal d'émission (T1) comporte deux branches d'entrée (XE1B, XE1A) raccordées respectivement à un joncteur ordinaire (p.e. J1) et à la borne particulière correspondante (B1) du sélecteur d'émission (SE) et deux branches de sortie (XE1C, XE1D) raccordées respectivement à une borne optique (QE1) du terminal (T1) et à un transducteur optoélectrique (K1...KN) fournissant un dit signal électrique de sélection au détecteur de défaillance (FE) lorsqu'une onde optique fournie à ce transducteur présente des caractéristiques anormales.

7. Liaison selon la revendication 5, caractérisée par le fait que les composants dudit terminal de la liaison (T1) constituent en outre un terminal de réception lui aussi conforme au terminal décrit dans la revendication 6, de sorte que ce terminal de la liaison constitue un terminal mixte, des joncteurs (J1, JN, JH) de ce terminal mixte correspondant respectivement auxdits joncteurs de ce terminal de réception et comportant chacun un récepteur (JR1, JRN, JRH) pour constituer le joncteur correspondant de ce terminal de réception, le détecteur de défaillance (FR) et le sélecteur (SR, FR) de ce terminal de réception constituant respectivement un détecteur de défaillance de réception (FR) et un sélecteur de réception (SR, FR), ce détecteur de défaillance de réception étant connecté électriquement aux sorties des récepteurs de joncteurs ordinaires (J1...JN) de ce terminal mixte pour en recevoir un éventuel signal de sélection.

## Patentansprüche

1. Optischer Wähler, der optische Schalter aufweist, die auf einem gemeinsamen transparenten Substrat (PE) ausgebildet sind und Wahlschalter (C1...C3-4) bilden, die es gestatten, einen optischen Weg (BC, C1, C2-1, C3-1, D1, B1) unter einer Vielzahl solcher auf dem Substrat vordefinierten Wege auszuwählen, wobei dafür jeder dieser Schalter zu mehreren solchen Wegen gehört und jeder dieser Wege mehrere dieser Schalter in Reihe aufweist, wobei der Wähler dadurch gekennzeichnet ist, daß weitere auf dem Substrat (PE) ausgebildete optische Schalter Isolationsschalter (D1...DN) bilden, wobei jeder solche Isolationsschalter zu einem einzigen solchen Weg gehört und am Ende dieses Weges angeordnet ist, um zu gestatten, diesen Weg von optischen Organen außerhalb dieses Wählers zu isolieren.

2. Optischer Wähler, wobei dieser Wähler (SE, FE) umfaßt:
- eine Vielzahl von besonderen Anschlußklemmen (B1...BN), die dafür ausgelegt sind, an jeweils eine Vielzahl von besonderen optischen Führungen (LE1...LEN) außerhalb dieses Wählers optisch angeschlossen zu werden,
- eine gemeinsame Anschlußklemme (BC), die dafür ausgelegt ist, direkt an eine gemeinsame optische Führung (LEH) außerhalb des Wählers optisch angeschlossen zu werden,
- ein transparentes Substrat (PE) das Unterschiede der Brechungsindices aufweist, die die optischen Führungen (2) bilden, wobei die Ausbreitung des Lichts in diesen Führungen für eine elektrische Steuerwirkung empfindlich ist und diese Führungen derart angeordnet sind, daß sie den optischen Teil eines Aufbaus von optischen Schaltern (SE) bilden, der außerdem einen elektrischen Teil aufweist, um diese Steuerwirkung auszuüben,
- und Elektroden (6, Fig. 2), die auf diesem Substrat ausgebildet sind, um diesen elektrischen Teil zu bilden,
- wobei dieser Schalteraufbau einen Auswahlaufbau (8) aufweist, wobei die Schalter dieses Auswahlaufbaus Wahlschalter (C1...C3-4) bilden, wobei jeder dieser Wahlschalter (C2-2) eine untere Anschlußklemme (C2-2A) und mehrere obere Anschlußklemmen (C2-2B, C2-2C) aufweist und dafür ausgelegt ist, auf Befehl die eine dieser oberen Anschlußklemmen auszuwählen, um diese untere Anschlußklemme an diese ausgewählte obere Anschlußklemme (C2-2B) anzuschließen, wobei diese Wahlschalter so angeordnet sind, daß sie eine Vielzahl von optischen Wegen (BC, C1, C2-1, C3-1, C3-1B)...(BC, C1, C2-2, C3-4, C3-4C) bilden können, die jeweils der Vielzahl der besonderen Anschlußklemmen (B1...BN) entsprechen, und jede gemeinsame Anschlußklemme (BC) an die diesem Weg entsprechenden besondere Anschlußklemme anschließen, wobei jeder Weg (BC...C3-4C) eine Folge von Schaltern (C1, C2-2, C3-4) umfaßt, die Ränge (1...3) in dieser Folge aufweisen, wobei die untere Anschlußklemme eines ersten Schalters dieses Weges (C1) an die gemeinsame Anschlußklemme (BC) angeschlossen ist, wobei die untere Anschlußklemme (C2-2A) eines zweiten Schalters (C2-2) dieses Weges an eine obere Anschlußklemme (C1-C) dieses ersten Schalters angeschlossen ist, und so weiter bis zu einem letzten Schalter (C3-4) dieses Weges, wobei dieser Weg noch eine von einer oberen Anschlußklemme dieses letzten Schalters gebildete Endanschlußklemme (C3-4C) aufweist, wobei ein Anschluß zwischen der Endanschlußklemme (C3-4C) dieses Weges und der diesem Weg entsprechenden besonderen Anschlußklemme (BN) vorgesehen ist, wobei parasitäre optische Kopplungen innerhalb des Substrats zwischen verschiedenen Wegen auftreten können,
- wobei dieser Wähler noch ein Steuerorgan (FE) aufweist, das so angeordnet ist, daß es ein eine ausgewählte besondere Anschlußklemme (B1) bezeichnendes Auswahlsignal empfängt, und dafür ausgelegt ist, in Antwort darauf die Wahlschalter derart zu steuern, daß sie den dieser ausgewählten besonderen Anschlußklemme entsprechenden optischen Weg (BC, C1, C2-1, C3-1, C3-1B) durchführend machen und so diese ausgewählte besondere Anschlußklemme an die gemeinsame Anschlußklemme (BC) anschließen,
wobei dieser Wähler dadurch gekennzeichnet ist, daß der Aufbau (SE) von optischen Schaltern auch eine Isolationsstufe (SG) aufweist, die von einer Vielzahl von Isolationsschaltern (D1...DN) in jeweiliger Entsprechung mit der Vielzahl der besonderen Anschlußklemmen (B1...BN) und mit der Vielzahl der optischen Wege gebildet wird, wobei jeder Isolationsschalter (D1) einerseits eine untere Anschlußklemme (D1A), die an die Endanschlußklemme (C3-1B) des diesem Schalter entsprechenden Weges angeschlossen ist, andererseits eine obere Anschlußklemme (B1) aufweist, die wenigstens an die diesem Schalter entsprechende besondere Anschlußklemme angeschlossen ist, wobei dieser Schalter auf Befehl durchführend, um seine beiden Anschlußklemmen gegenseitig anzuschließen, oder sperrend ist, um sie derart zu isolieren, daß der Anschluß zwischen dieser Endanschlußklemme und dieser besonderen Anschlußklemme verwirklicht bzw. aufgehoben wird,
- wobei das Steuerorgan (FE) auch dafür ausgelegt ist, in Antwort auf ein Auswahlsignal die Isolationsschalter zu steuern, um den der ausgewählten besonderen Anschlußklemme (B1) entsprechenden Isolationsschalter (D1) durchführend zu machen und um die anderen Isolationsschalter (DN) sperrend zu machen.

3. Wähler nach Anspruch 2, dadurch gekennzeichnet, daß er auch eine Vielzahl von passiven optischen Kopplern (XE1...XEN) aufweist, die jeweils der Vielzahl der besonderen Anschlußklemmen (B1...BN) entsprechen, wobei jeder dieser Koppler (XE1) mindestens drei Zweige (XE1A, XE1B, XE1C) hat, die in diesem transparenten Substrat (PE) ausgebildet sind, wobei ein Zweig (XE1A) dieses Kopplers an die diesem Koppler entsprechende besondere Anschlußklemme (B1) angeschlossen ist.

4. Optische Verbindung, die zwei Anschlüsse (T1, T2), jeweils zum Einrichten von Nachrichtenverbindungen mit N Teilnehmern durch parallele Übertragung einer Anzahl N von elektrischen Signalen und zum Ausführen einer Umwandlung zwischen diesen N elektrischen Signalen und N optischen Signalen, die jeweils diesen elektrischen Signalen entsprechen,
- und eine Anzahl N von Übertragungsleitungen (LE1...LEN) mit Lichtleitfasern aufweist, die jeweils diesen optischen Signalen entsprechen, um jeweils das entsprechende optische Signal zwischen diesen beiden Anschlüssen zu übertragen,
- wobei jeder Anschluß umfaßt:
- N elektrische Anschlußklemmen (UE1...UEN), die die jeweiligen Nummern (1...N) haben und jeweils an N Teilnehmer angeschlossen sind,
- N optische Anschlußklemmen (QE1...QEN), die die jeweiligen Nummern (1...N) haben und jeweils an N Übertragungsleitungen (LE1...LEN) mit Lichtleitfasern angeschlossen sind,
- und einen Verbindungsaufbau, um diese N elektrischen Anschlußklemmen unter Ausführung der Umwandlung zwischen den elektrischen Signalen und den optischen Signalen jeweils an diese N optischen Anschlußklemmen anzuschließen, wobei dieser Verbindungsaufbau selbst umfaßt:
- N gewöhnliche Anpassungsschaltungen (J1...JN) mit den jeweiligen Nummern, die jeweils den N Übertragungsleitungen (LE1...LEN) entsprechen, um jeweils die Umwandlung zwischen dem elektrischen Signal und dem dieser Leitung entsprechenden optischen Signal auszuführen, wobei jede dieser Anpassungsschaltungen dafür anfällig ist auszufallen (J1), wobei eine elektrische (UE1) oder optische Anschlußklemme (QE1), die mit dieser ausfallenden Anpassungsschaltung verbunden oder an sie angeschlossen war, eine vom Ausfall dieser Anpassungsschaltung betroffene elektrische oder optische Anschlußklemme bildet,
- eine Hilfsanpassungsschaltung (JH), um eine eventuell ausfallende gewöhnliche Anpassungsschaltung (J1) zu ersetzen,
- einen Ausfalldetektor (FE), um im Falle des Ausfalls einer gewöhnlichen Anpassungsschaltung (J1) ein Auswahlsignal zu empfangen, das die Nummer dieses ausfallenden Detektors darstellt,
- ein Verbindungsnetz (20), das vom Ausfalldetektor (FE) derart gesteuert wird, daß dieses Netz jeweils die N elektrischen Anschlußklemmen (UE1...UEN) mit den N gewöhnlichen Anpassungsschaltungen (J1...JN) verbindet, solange keine gewöhnliche Anpassungsschaltung ausfällt, und daß, wenn eine gewöhnliche Anpassungsschaltung ausfällt (J1), dieses Netz die von diesem Ausfall betroffene elektrische Anschlußklemme (UE1) mit der Hilfsanpassungsschaltung (JH) verbindet,
- einen Wähler (SE, FE) nach Anspruch 2, wobei die gemeinsame Anschlußklemme (BC) dieses Wählers an die Hilfsanpassungsschaltung (JH) angeschlossen ist, wobei das Steuerorgan dieses Wählers vom Ausfalldetektor (FE) gebildet wird, wobei die besonderen Anschlußklemmen (B1...BN) dieses Wählers N an der Zahl sind und die Nummern (1...N) haben, wobei dieser Ausfalldetektor, wenn eine gewöhnliche Anpassungsschaltung ausfällt (J1), einen Auswahlbefehl gibt, der die besondere Anschlußklemme (B1) bezeichnet, die die gleiche Nummer wie diese ausfallende Anpassungsschaltung hat, so daß diese besondere Anschlußklemme an die Hilfsanpassungsschaltung (JH) angeschlossen wird,
- und N passive optische Koppler (XE1...XEN), die Hilfskoppler bilden, um jede optische Anschlußklemme (QE1) des Anschlusses (T1) gleichzeitig an die gewöhnliche Anpassungsschaltung (J1) und an die besondere Anschlußklemme (B1) des Wählers (SE) anzuschließen, die die gleiche Nummer (1) wie die optische Anschlußklemme des Anschlusses haben.

5. Verbindung nach Anspruch 4, bei der wenigstens einige der Bestandteile eines Anschlusses dieser Verbindung (T1) einen Sendeanschluß entsprechend dem in diesem Anspruch beschriebenen Anschluß bilden, wobei die gewöhnliche Anpassungsschaltung (J1) dieses Sendeanschlusses einen Sender (JE1) aufweist, der von einem Halbleiterlaser gebildet wird und von einer Stromversorgung (22) mit einem elektrischen Polarisationsstrom versorgt wird und andererseits ein elektrisches Signal empfängt, um ein durch dieses elektrische Signal moduliertes optisches Signal auszusenden, wobei der Ausfalldetektor und der Wähler dieses Sendeanschlusses jeweils einen Sende-Ausfalldetektor (FE) und einen Sende-Wähler (SE, FE) bilden,
wobei diese Verbindung dadurch gekennzeichnet ist, daß dieser Sendeanschluß (T1) außerdem N Polarisationsschalter (Z1...ZN) aufweist, die die Nummern (1...N) haben und jeweils in Reihe zwischen die Stromversorgung (22) und den Sender (JE1) der gewöhnlichen Anpassungsschaltung (J1) geschaltet sind, die die gleiche Nummer wie dieser Schalter hat, wobei diese Schalter vom Sende-Ausfalldetektor (FE) gesteuert werden, wenn eine gewöhnliche Anpassungsschaltung (J1) ausfällt, um den elektrischen Polarisationsstrom des Senders dieser Anpassungsschaltung zu unterbrechen.

6. Verbindung nach Anspruch 5, dadurch gekennzeichnet, daß jeder Hilfskoppler (z.B. XE1) des Sendeanschlusses (T1) zwei Eingangszweige (XE1B, XE1A), die an eine gewöhnliche Anpassungsschaltung (z.B. J1) bzw. an die entsprechende besondere Anschlußklemme (B1) des Sende-Wählers (SE) angeschlossen sind, und zwei Ausgangszweige (XE1C, XE1D) aufweist, die an eine optische Anschlußklemme (QE1) des Anschlusses (T1) bzw. einen optoelektrischen Wandler (K1...KN) angeschlossen sind, der ein elektrisches Auswahlsignal an den Ausfalldetektor (FE) liefert, wenn eine an diesen Wandler gelieferte Lichtwelle anormale Eigenschaften aufweist.

7. Verbindung nach Anspruch 5, dadurch gekennzeichnet, daß die Bestandteile dieses Anschlusses der Verbindung (T1) außerdem einen Empfangsanschluß bilden, der auch dem in Anspruch 6 beschriebenen Anschluß entspricht, so daß dieser Anschluß der Verbindung einen gemischten Anschluß bildet, wobei die Anpassungsschaltungen (J1, JN, JH) dieses gemischten Anschlusses jeweils den Anpassungsschaltungen dieses Empfangsanschlusses entsprechen und jeweils einen Empfänger (JR1, JRN, JRH) aufweisen, um die entsprechende Anpassungsschaltung dieses Empfangsanschlusses zu bilden, wobei der Ausfalldetektor (FR) und der Wähler (SR, RF) dieses Empfangsanschlusses jeweils einen Empfangs-Ausfalldetektor (FR) und einen Empfangs-Wähler (SR, FR) bilden, wobei dieser Empfangs-Ausfalldetektor mit den Ausgängen der Empfänger der gewöhnlichen Anpassungsschaltungen (J1...JN) dieses gemischten Anschlusses verbunden sind, um ein eventuelles Auswahlsignal zu empfangen.

## Claims

1. An optical selector including optical switches formed on a common transparent substrate (PE) and constituting selection switches (C1, ..., C3-4) enabling an optical path (BC, C1, C2-1, C3-1, D1, B1) to be selected from a plurality of such paths predefined on the substrate, each of the switches belonging to a plurality of such paths for that purpose, and each of the paths including a plurality of such switches in series, the selector being characterized by the fact that other optical switches formed on the substrate (PE) constitute isolation switches (D1, ..., DN), each of which belongs to one such path only and is disposed at the end of the path so as to enable the path to be isolated from optical members outside the selector.

2. An optical selector, which selector (SE, FE) includes:
a plurality of individual terminals (B1, ..., BN) suitable for being optically connected to respective ones of a plurality of individual optical waveguides (LE1, ..., LEN) outside the selector;
a common terminal (BC) suitable for being optically connected directly to a common optical waveguide (LEH) outside the selector;
a transparent substrate (PE) having refractive index differences forming optical waveguides (2), the propagation of light along the waveguides being responsive to electrical control action and the waveguides being disposed so as to constitute the optical portion of a set of optical switches (SE) further including an electrical portion for taking said control action; and
electrodes (6, Figure 2) formed on the substrate so as to constitute the electrical portion;
the set of switches including a selection set (8), the switches in the selection set constituting selection switches (C1, ..., C3-4), each of the selection switches (C2-2) including a bottom terminal (C2-2A) and a plurality of top terminals (C2-2B, C2-2C), and being capable of selecting any one of the top terminals on command so as to connect the bottom terminal optically to the selected top terminal (C2-2B), the selection switches being disposed so that they can form a plurality of optical paths (BC, C1, C2-1, C3-1, C3-1B), ..., (BC, C1, C2-2, C3-4, C3-4C) corresponding to respective ones of the plurality of individual terminals (B1, ..., BN), each of which paths connects the common terminal (BC) to the individual terminal corresponding to the path, each path (BC, ..., C3-4C) including a succession of switches (C1, C2-2, C3-4) having ranks (1, ..., 3) in the succession, a first switch of the path (C1) having its bottom terminal connected to the common terminal (BC), a second switch (C2-2) of the path having its bottom terminal (C2-2A) connected to a top terminal (C1-C) of the first switch, and so on to the last switch (C3-4) of the path, the path further including an end terminal (C3-4C) constituted by a top terminal of the last switch, a connection being provided between the end terminal (C3-4C) of the path and the individual terminal (BN) corresponding to the path, it being possible for interfering optical coupling to appear in the substrate between the various paths;
the selector further including a control member (FE) disposed so as to receive a selection signal designating a selected individual terminal (B1) and capable of responding by controlling selection switches so as to open the optical path (BC, C1, C2-1, C3-1, C3-1B) corresponding to the selected individual terminal, thereby connecting the selected individual terminal to the common terminal (BC);
the selector being characterized by the fact that said set of optical switches (SE) also includes an isolation stage (SG) formed by a plurality of isolation switches (D1, ..., DN) corresponding to respective ones of the plurality of individual terminals (B1, ..., BN) and to respective ones of the optical paths, each isolation switch (D1) including both a bottom terminal (D1A) connected to the end terminal (C3-1B) of the path corresponding to the switch, and also at least one top terminal (B1) connected to the individual terminal corresponding to the switch, the switch being either switched on so as to connect its two terminals together, or else switched off so as to isolate them, so that said connection between the end terminal and the individual terminal is respectively made or broken on command;
the control member (FE) also being capable of responding to a selection signal by controlling the isolation switches so as to switch on the isolation switch (D1) corresponding to the selected individual terminal (B1), and so as to switch off the other isolation switches (DN).

3. A selector according to claim 2, characterized by the fact that it also includes a plurality of passive optical couplers (XE1, ..., XEN) corresponding to respective ones of the plurality of said individual terminals (B1, ..., BN), each of the couplers (XE1) having at least three branches (XE1A, XE1B, XE1C) formed in said transparent substrate (PE), a branch (XE1A) of the coupler being connected to the individual terminal (B1) corresponding to the coupler.

4. An optical link including two stations (T1, T2), each of which sets up calls with N users by transmitting a number N of electrical signals in parallel, and transforms the N electrical signals into N optical signals corresponding to respective ones of the electrical signals; and
a number N of optical fiber transmission lines (LE1, ..., LEN) corresponding to respective ones of the optical signals, so that each transmission line transmits the corresponding optical signal between the two stations;
each station including:
N electrical terminals (UEI, ..., UEN) having respective numbers (1, ..., N), and connected to respective ones of the N users;
N optical terminals (QE1, ..., QEN) having respective numbers (1, ..., N) and being connected to respective ones of the N optical fiber transmission lines (LE1, ..., LEN); and
a connector set for connecting the N electrical terminals to respective ones of the N optical terminals while transforming the electrical signals into optical signals, the connector set itself including:
N ordinary connectors (J1, ..., JN) having respective numbers corresponding to respective ones of the N transmission lines (LE1, ..., LEN), each connector transforming the electrical signal into the optical signal corresponding to the line, it being possible for each of the connectors to fail, an electrical terminal (UE1) or an optical terminal (QE1) which was connected or switched over to the failed connector (J1) constituting an electrical terminal or an optical terminal that is concerned by the failure of the connector;
a standby connector (JH) for replacing an ordinary connector in the event that that ordinary connector (J1) fails;
a failure detector (FE) which, in the event that an ordinary connector (J1) fails, receives a selection signal representing the number of the failed detector;
a switching network (20) controlled by the failure detector (FE) so that, so long as no ordinary connector fails, the network connects the N electrical terminals (UE1, ..., UEN) to respective ones of the N ordinary connectors (J1, ..., JN), and, when an ordinary connector fails and becomes a failed connector (J1), the network connects the electrical terminal (UE1) concerned by the failure to the standby connector (JH);
a selector (SE, FE) according to claim 2, the common terminal (BC) of the selector being connected to the standby connector (JH), the control member of the selector being constituted by the failure detector (FE), the number of individual terminals (B1, ..., BN) of the selector being N, and the individual terminals having respective numbers (1, ..., N), the failure detector giving an order of selection when an ordinary connector (J1) fails, which order of selection designates that individual terminal (B1) which has the same number as the failed connector, so as to connect that individual terminal to the standby connector (JH); and
N passive optical couplers (XE1, ..., XEN) constituting standby couplers for connecting each optical terminal (QE1) of the station (T1) to that ordinary connector (J1) and to that individual terminal (B1) of the selector (SE) which have the same number (1) as the optical terminal of the station.

5. A link according to claim 4, in which at least some of the components of a station of the link (T1) constitute a transmission station that complies with the station defined in that claim, each ordinary connector (J1) of the transmission station including an emitter (JE1) constituted by a semiconductor laser and powered with a bias electrical current from a power source (22), and receiving one of said electrical signals so as to transmit one of said optical signals modulated by the electrical signal, the failure detector and the selector of the transmission station respectively constituting a transmission failure detector (FE), and a transmission selector (SE, FE);
the link being characterized by the fact that the transmission station (T1) further includes N bias interrupters (Z1, ..., ZN) having numbers (1, ..., N), each interrupter being connected in series between said power source (22) and the emitter (JE1) of the ordinary connector (J1) having the same number as the interrupter, the interrupter being controlled by the transmission failure detector (FE) when an ordinary connector (J1) fails, so as interrupt the bias electrical current of the emitter of the connector.

6. A link according to claim 5, characterized by the fact that each standby coupler (e.g. XE1) of the transmission station (T1) includes two input branches (XE1B, XE1A) connected respectively to an ordinary connector (e.g. J1), and to the corresponding individual terminal (B1) of the transmission selector (SE), and two output branches (XE1C, XE1D) connected respectively to an optical terminal (QE1) of the station (T1), and to an optoelectrical transducer (K1, ..., KN) supplying one of said selection electrical signals to the failure detector (FE) when a light wave supplied to the transducer has abnormal characteristics.

7. A link according to claim 5, characterized by the fact that the components of said station (T1) of the link further constitute a reception station which also complies with the station described in claim 6, so that the station of the link constitutes a combined station, the connectors (J1, JN, JH) of the combined station corresponding to respective ones of said connectors of the reception station, each connector including a receiver (JR1, JRN, JRH) so as to constitute the corresponding connector of the reception station, the failure detector (FR) and the selector (SR, FR) of the reception station respectively constituting a reception failure detector (FR) and a reception selector (SR, FR), the reception failure detector being electrically connected to the outputs of the receivers of the ordinary connectors (J1, ..., JN) of the combined terminal so as to receive any selection signals therefrom.
